# EUROPEAN PATENT APPLICATION

(11) **EP 4 450 208 A1**
(43) Date of publication of application: **23.10.2024**
(21) Application number: 22907122.0
(22) Date of filing: 17.11.2022
(51) Int. Cl.: B23K 26/064, B23K 26/00, G02B 6/036, G02B 6/42

(54) **LASER DEVICE**

(30) Priority: 15.12.2021 JP 2021203156
(71) Applicant: FUJIKURA LTD., Koto-ku Tokyo 135-8512 (JP)
(72) Inventor: MATSUOKA, Yuji, Sakura-shi, Chiba 285-8550 (JP); NGUYEN, Huy Khanh, Sakura-shi, Chiba 285-8550 (JP)
(74) Representative: Bardehle Pagenberg Partnerschaft mbB Patentanwälte Rechtsanwälte
(86) International application number: PCT/JP2022/042719
(87) International publication number: WO 2023/112591

(57) **Abstract**

The present invention provides a laser apparatus capable of detecting optical feedbacks propagating through a plurality of optical waveguides in an output optical fiber with a simple and inexpensive configuration. A laser apparatus 1 has an output optical fiber 40 including a center core 41 and a ring core 43, a plurality of laser light sources 11 and 12 operable to generate a laser beam, input optical fibers 20 and 30 that allows the laser beam to propagate therethrough, an optical combiner configured so that the input optical fibers 20 and 30 are optically connected to the center core 41 and the ring core 43 of the output optical fiber 40, a laser emission portion 60 operable to emit the laser beams directed to the center core 41 and the ring core 43 of the output optical fiber 40, and an optical feedback detection unit 7 operable to detect a first optical feedback returning from the laser emission portion 60 through the center core 41 of the output optical fiber 40 toward the optical combiner 50 and a second optical feedback returning from the laser emission portion 60 through the ring core 43 of the output optical fiber 40 toward the optical combiner 50 together.

## Description

### Technical Field

The present invention relates to a laser apparatus, and more particularly to a laser apparatus capable of outputting a laser beam from an output optical fiber having a plurality of optical waveguides.

### Background Art

For improvement in processing performance such as a processing rate and a processing quality in the field of laser processing, it is important to change a beam profile of a laser beam directed to a workpiece depending on a material or a thickness of the workpiece. From this point of view, in recent years, there has been developed a technique capable of changing a beam profile of a laser beam to be directed to a workpiece into a desired form by forming a plurality of optical waveguides in an output optical fiber and controlling laser beams to be introduced into the respective optical waveguides. For example, there has been known a laser apparatus that introduces laser beams from different laser sources into a center core of an output optical fiber and an outer core arranged around the center core for laser processing (see, e.g., Patent Literature 1).

In such a laser apparatus, a laser beam emitted from a laser emission portion to a workpiece may be reflected from, for example, a surface of the workpiece so as to return as an optical feedback from the laser emission portion to the laser apparatus. Such an optical feedback may damage components of the laser apparatus. Therefore, it is necessary to monitor any optical feedback during an operation of the laser apparatus. Particularly, in a case where an output optical fiber having a plurality of optical waveguides is used as described above, an optical feedback propagates through the respective optical waveguides independently of each other. Thus, there has been required a technique capable of detecting optical feedbacks propagating through a plurality of optical waveguides with a simple and inexpensive configuration.

### Prior Art Literature

### Patent Literature

Patent Literature 1: JP 2018-524174 A

### Summary of the Invention

### Problem(s) to be Solved by the Invention

The present invention has been made in view of the above drawbacks in the prior art. It is, therefore, an object of the present invention to provide a laser apparatus capable of detecting optical feedbacks propagating through a plurality of optical waveguides in an output optical fiber with a simple and inexpensive configuration.

### Means for Solving Problem(s)

According to one aspect of the present invention, there is provided a laser apparatus capable of detecting optical feedbacks propagating through a plurality of optical waveguides in an output optical fiber with a simple and inexpensive configuration. The laser apparatus comprises an output optical fiber including a first optical waveguide and a second optical waveguide; at least one first laser light source operable to generate a laser beam; at least one first input optical fiber that allows the laser beam generated by the at least one first laser light source to propagate therethrough; at least one second laser light source operable to generate a laser beam; at least one second input optical fiber that allows the laser beam generated by the at least one second laser light source to propagate therethrough; an optical combiner configured so that the at least one first input optical fiber is optically connected to the first optical waveguide of the output optical fiber and that the at least one second input optical fiber is optically connected to the second optical waveguide, the optical combiner being capable of directing the laser beams from the at least one first laser light source and the at least one second laser light source to the first optical waveguide and the second optical waveguide of the output optical fiber; a laser emission portion operable to emit the laser beams that have entered the first optical waveguide and the second optical waveguide of the output optical fiber from the optical combiner; a first optical feedback fiber that allows a first optical feedback that has returned from the laser emission portion to the first optical waveguide of the output optical fiber toward the optical combiner to propagate therethrough; and a second optical feedback fiber that allows a second optical feedback that has returned from the laser emission portion to the second optical waveguide of the output optical fiber toward the optical combiner to propagate therethrough; and an optical feedback detection unit operable to detect the first optical feedback that has propagated through the first optical feedback fiber and the second optical feedback that has propagated through the second optical feedback fiber together.

### Brief Description of Drawings

Fig. 1 is a schematic block diagram showing a configuration of a laser apparatus according to a first embodiment of the present invention.
Fig. 2 is a diagram showing a cross-section of an output optical fiber in the laser apparatus illustrated in Fig. 1 along with a radial refractive index distribution.
Fig. 3 is a perspective view showing an optical combiner in the laser apparatus illustrated in Fig. 1.
Fig. 4 is an exploded perspective view of the optical combiner illustrated in Fig. 3.
Fig. 5A is a plan view schematically showing an optical feedback detection unit in the laser apparatus illustrated in Fig. 1.
Fig. 5B is a cross-sectional view taken along line A-A of Fig. 5A.
Fig. 6 is a graph exemplarily showing a relationship between a power of optical feedbacks propagating through a first optical feedback fiber and a second optical feedback fiber illustrated in Fig. 5B and a detection voltage by a photodetector.
Fig. 7A is a plan view schematically showing an optical feedback detection unit in a laser apparatus according to a second embodiment of the present invention.
Fig. 7B is a cross-sectional view taken along line B-B of Fig. 7A.
Fig. 8 is a cross-sectional view schematically showing a variation of the optical feedback detection unit illustrated in Fig. 7.
Fig. 9A is a plan view schematically showing an optical feedback detection unit in a laser apparatus according to a third embodiment of the present invention.
Fig. 9B is a cross-sectional view taken along line C-C of Fig. 9A.
Fig. 10 is a graph exemplarily showing a relationship between a power of optical feedbacks propagating through a first optical feedback fiber and a second optical feedback fiber illustrated in Fig. 9B and a detection voltage by a photodetector.
Fig. 11 is a cross-sectional view schematically showing an optical feedback detection unit in a laser apparatus according to a fourth embodiment of the present invention.
Fig. 12 is a schematic block diagram showing a configuration of a laser apparatus according to a fifth embodiment of the present invention.

### Mode(s) for Carrying Out the Invention

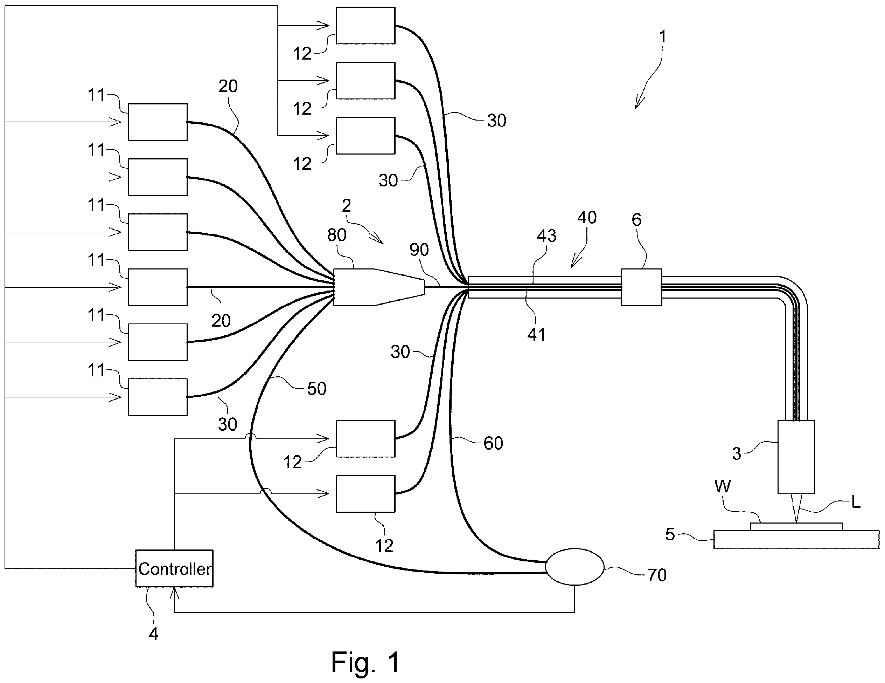

Embodiments of a laser apparatus according to the present invention will be described in detail below with reference to Figs. 1 to 12. In Figs. 1 to 12, the same or corresponding components are denoted by the same or corresponding reference numerals and will not be described below repetitively. Furthermore, in Figs. 1 to 12, the scales or dimensions of components may be exaggerated, or some components may be omitted. Unless mentioned otherwise, in the following description, terms such as "first," "second," and so forth are only used to distinguish one component from another and are not used to indicate a specific order or a specific sequence.

Fig. 1 is a schematic block diagram showing a configuration of a laser apparatus 1 according to a first embodiment of the present invention. As shown in Fig. 1, the laser apparatus 1 of the present embodiment has a plurality of first laser light sources 11 operable to generate a laser beam, a plurality of second laser light sources 12 operable to generate a laser beam, first input optical fibers 20 that allow the laser beams generated by the first laser light sources 11 to propagate therethrough, second input optical fibers 30 that allow the laser beams generated by the second laser light sources 12 to propagate therethrough, an output optical fiber 40 having a plurality of optical waveguides as described below, an optical combiner 2 operable to optically couple each of the first input optical fibers 20 and the second input optical fibers 30 to the optical waveguides of the output optical fiber 40, a laser emission portion 3 provided on an end of the output optical fiber 40, a controller 4 operable to control the laser light sources 11 and 12, and a stage 5 that holds a workpiece W. For example, a fiber laser or a semiconductor laser may be used for the laser light sources 11 and 12. Although the laser apparatus 1 of the present embodiment includes six first laser light sources 11 and five second laser light sources 12, the numbers of the laser light sources 11 and 12 are not limited to those figures.

Furthermore, the laser apparatus 1 includes a first optical feedback fiber 50, a second optical feedback fiber 60, and an optical feedback detection unit 70 operable to detect light that has propagated through the first optical feedback fiber 50 and the second optical feedback fiber 60. Unless otherwise mentioned in the present embodiments, the term "downstream" refers to a direction from the laser light sources 11 or 12 or the optical feedback detection unit 70 to the laser emission portion 3, and the term "upstream" refers to an opposite direction thereto.

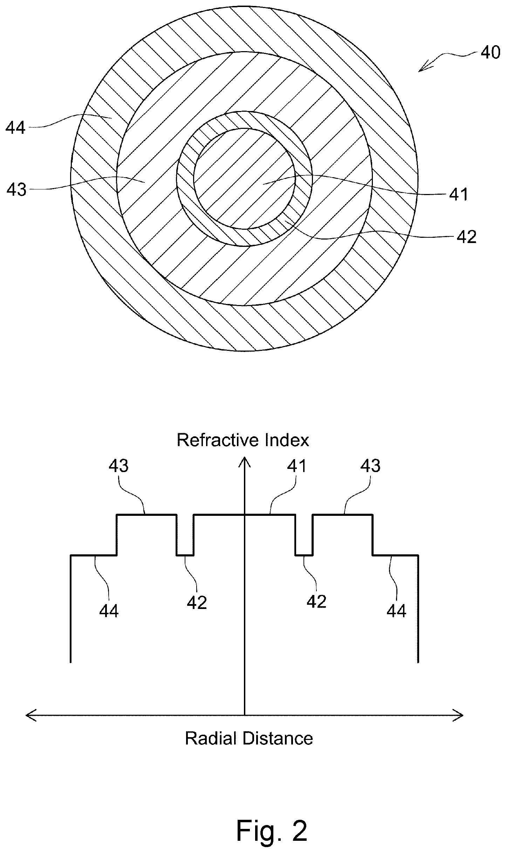

Fig. 2 is a diagram showing a cross-section of an output optical fiber 40 along with a radial refractive index distribution. As shown in Fig. 2, the output optical fiber 40 has a center core 41, an inner cladding 42 that surrounds a circumference of the center core 41, a ring core 43 that surrounds a circumference of the inner cladding 42, and an outer cladding 44 that surrounds a circumference of the ring core 43. The inner cladding 42 has a refractive index lower than refractive indices of the center core 41 and the ring core 43. The outer cladding 44 has a refractive index lower than the refractive index of the ring core 43. Thus, an interior of the center core 41 forms an optical waveguide (for example, a first optical waveguide) that allows light to propagate therethrough, and an interior of the ring core 43 forms an optical waveguide (for example, a second optical waveguide) that allows light to propagate therethrough. Thus, in the present embodiment, the center core 41 and the ring core 43, each of which forms an independent optical waveguide, are arranged concentrically within the output optical fiber 40. In the present embodiment, the outer cladding 44 is formed around the ring core 43 as a low-refractive-index medium having a refractive index lower than the refractive index of the ring core 43. Such a low-refractive-index medium is not limited to a covering layer such as the outer cladding 44. For example, an air layer may be formed around the ring core 43 and may be used as a low-refractive-index medium.

An outside diameter of the center core 41, an outside diameter of the inner cladding 42, an outside diameter of the ring core 43, and an outside diameter of the outer cladding 44 in the output optical fiber 40 are key factors that determine the intensity distribution of a laser beam L emitted from the laser emission portion 3 and may be designed in an adequate manner depending on an application or an output specification of the laser apparatus 1. The refractive index of the inner cladding 42 may be the same as or different from the refractive index of the outer cladding 44.

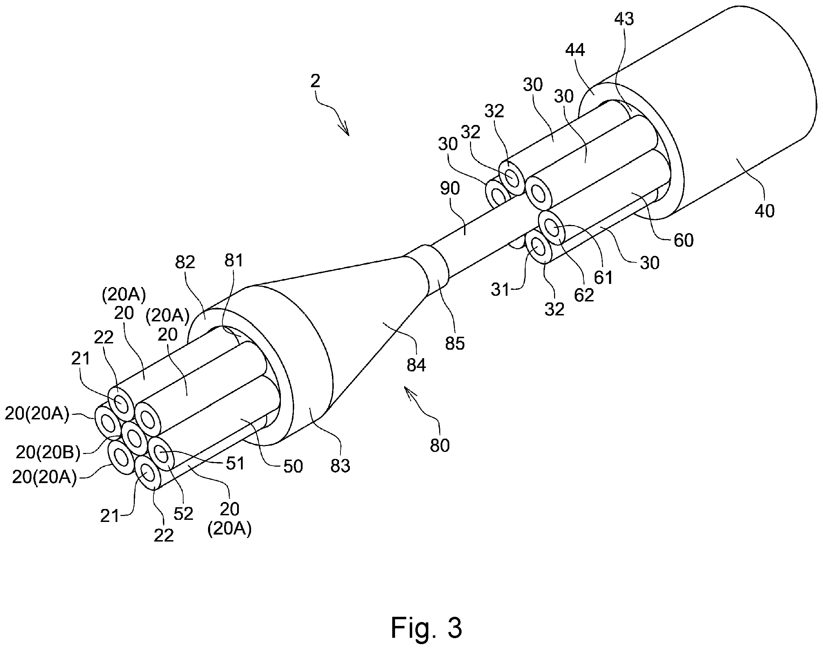

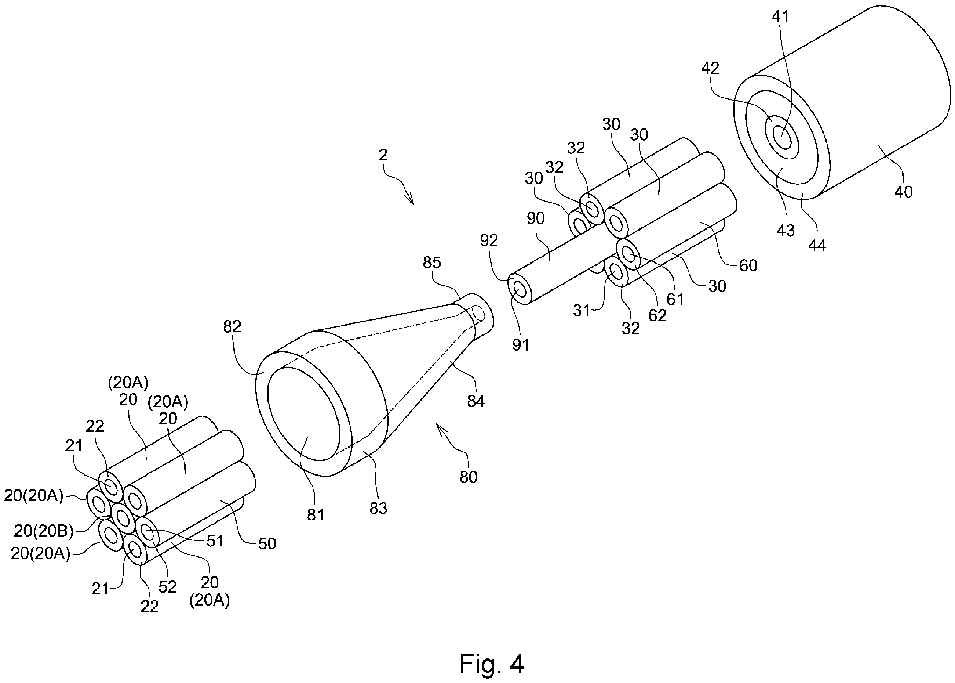

Fig. 3 is a perspective view showing the optical combiner 2, and Fig. 4 is an exploded perspective view of the optical combiner 2. As shown in Figs. 3 and 4, this optical combiner 2 includes downstream ends of the first input optical fibers 20, a downstream end of the first optical feedback fiber 50, a bridge fiber 80 connected to the first input optical fibers 20 and the first optical feedback fiber 50, an intermediate optical fiber 90 connected to the bridge fiber 80, downstream ends of the second input optical fibers 30, a downstream end of the second optical feedback fiber 60, and an upstream end of the output optical fiber 40. The optical combiner 2 of the present embodiment optically couples the downstream ends of the first input optical fibers 20 to the center core 41 of the output optical fiber 40 and optically couples the downstream ends of the second input optical fibers 30 to the ring core 43 of the output optical fiber 40.

Each of the first input optical fibers 20 includes a core 21 and a cladding 22 that surrounds a circumference of the core 21. The cladding 22 has a refractive index lower than a refractive index of the core 21. Thus, an interior of the core 21 in the first input optical fiber 20 forms an optical waveguide that allows light to propagate therethrough. Therefore, a laser beam generated by each of the first laser light sources 11 propagates through the core 21 of the optical fiber 20.

The first optical feedback fiber 50 includes a core 51 and a cladding 52 that surrounds a circumference of the core 51. The cladding 52 has a refractive index lower than a refractive index of the core 51. Thus, an interior of the core 51 in the first optical feedback fiber 50 forms an optical waveguide that allows light to propagate therethrough. The same type of the optical fiber as the first input optical fibers 20 may be used for the first optical feedback fiber 50.

As shown in Figs. 3 and 4, in the present embodiment, the first input optical fibers 20 and the first optical feedback fiber 50 are connected to the bridge fiber 80 in a state in which five first input optical fibers 20A and one first optical feedback fiber 50 surround one first input optical fiber 20B and contact an outer circumferential surface of the first input optical fiber 20B. At that time, adjacent first input optical fibers 20 and first optical feedback fiber 50 are brought into contact with each other. The position of the first optical feedback fiber 50 may be exchanged with the position of the first input optical fiber 20B.

The bridge fiber 80 includes a core 81 and a cladding 82 that surrounds a circumference of the core 81. The cladding 82 has a refractive index lower than a refractive index of the core 81. Thus, an interior of the core 81 forms an optical waveguide that allows light to propagate therethrough. For example, an air layer may be formed around the core 81 and may be used instead of the cladding 82. The bridge fiber 80 with such a core-cladding structure includes a first cylindrical portion 83 extending along an optical axis with a fixed outside diameter, a diameter reduction portion 84 having an outside diameter gradually reduced from the first cylindrical portion 83 along the optical axis, and a second cylindrical portion 85 extending from the diameter reduction portion 84 along the optical axis with a fixed outside diameter.

The downstream ends of the first input optical fibers 20 and the downstream end of the first optical feedback fiber 50 are connected to an upstream end face (bridge incident surface) of the first cylindrical portion 83 by fusion splice. Furthermore, an upstream end of the intermediate optical fiber 90 is connected to a downstream end face of the second cylindrical portion 85 by fusion splice. The size of the core 81 on the upstream end face of the bridge fiber 80 is large enough to include therein the cores 21 of the first input optical fibers 20 and the core 51 of the first optical feedback fiber 50. The first input optical fibers 20 and the first optical feedback fiber 50 are connected to the bridge fiber 80 by fusion splice in a state in which the cores 21 of the first input optical fibers 20 and the core 51 of the first optical feedback fiber 50 are located within an area of the core 81 on the upstream end face of the bridge fiber 80. Thus, 90 % or more (more preferably 95 % or more) of light propagating through the cores 21 of the first input optical fibers 20 is optically coupled to the core 81 of the bridge fiber 80.

In this manner, the bridge fiber 80 is configured to allow laser beams that have propagated through the cores 21 of the first input optical fibers 20 to propagate through an interior of the core 81 and reduce the beam diameter of the laser beams through the diameter reduction portion 84. In order to suppress reflection of a laser beam when the laser beam enters the core 81 of the bridge fiber 80 from the cores 21 of the first input optical fibers 20, the core 81 of the bridge fiber 80 may preferably have a refractive index that is substantially the same as a refractive index of the cores 21 of the first input optical fibers 20.

The intermediate optical fiber 90 has a core 91 and a cladding 92 that surrounds a circumference of the core 91. The cladding 92 has a refractive index lower than a refractive index of the core 91. Thus, an interior of the core 91 forms an optical waveguide that allows light to propagate therethrough. The size of the core 91 of the intermediate optical fiber 90 is equal to or greater than the size of the core 81 on the downstream end face of the bridge fiber 80. The bridge fiber 80 and the intermediate optical fiber 90 are connected to each other by fusion splice in a state in which the core 81 on the downstream end face of the bridge fiber 80 is located within an area of the core 91 of the intermediate optical fiber 90. Thus, 90 % or more (more preferably 95 % or more) of light propagating through the core 81 of the bridge fiber 80 is optically coupled to the core 91 of the intermediate optical fiber 90. In this manner, the intermediate optical fiber 90 is configured to allow a laser beam that has propagated through the bridge fiber 80 to propagate through an interior of the core 91. In order to suppress reflection of a laser beam when the laser beam enters the core 91 of the intermediate optical fiber 90 from the core 81 of the bridge fiber 80, the core 91 of the intermediate optical fiber 90 may preferably have a refractive index that is substantially the same as a refractive index of the core 81 of the bridge fiber 80.

Each of the second input optical fibers 30 has a core 31 and a cladding 32 that surrounds a circumference of the core 31. The cladding 32 has a refractive index lower than a refractive index of the core 31. Thus, an interior of the core 31 in the second input optical fiber 30 forms an optical waveguide that allows light to propagate therethrough. Therefore, a laser beam generated by each of the second laser light sources 12 propagates through the core 31 of the second input optical fiber 30.

The second optical feedback fiber 60 has a core 61 and a cladding 62 that surrounds a circumference of the core 61. The cladding 62 has a refractive index lower than a refractive index of the core 61. Thus, an interior of the core 61 in the second optical feedback fiber 60 forms an optical waveguide that allows light to propagate therethrough. The same type of the optical fiber as the second input optical fibers 30 may be used for the second optical feedback fiber 60.

The downstream end of the aforementioned intermediate optical fiber 90, the downstream ends of the aforementioned second input optical fibers 30, and the downstream end of the aforementioned second optical feedback fiber 60 are connected to an upstream end face of the output optical fiber 40 by fusion splice. As shown in Figs. 3 and 4, in the present embodiment, the second input optical fibers 30 and the second optical feedback fiber 60 are connected to the output optical fiber 40 in a state in which five second input optical fibers 30 and one second optical feedback fiber 60 surround the intermediate optical fiber 90 and contact an outer circumferential surface of the intermediate optical fiber 90. At that time, adjacent first second input optical fibers 30, the second optical feedback fiber 60, and the intermediate optical fiber 90 are brought into contact with each other.

The downstream end of the intermediate optical fiber 90 is connected to the upstream end of the output optical fiber 40 by fusion splice in a state in which the core 91 of the intermediate optical fiber 90 is located within an area of the center core 41 of the output optical fiber 40. Thus, 90 % or more (more preferably 95 % or more) of light propagating through the core 91 of the intermediate optical fiber 90 is optically coupled to the center core 41 of the output optical fiber 40. Furthermore, the downstream ends of the second input optical fibers 30 and the downstream end of the second optical feedback fiber 60 are connected to the upstream end of the output optical fiber 40 by fusion splice in a state in which the cores 31 of the second input optical fibers 30 and the core 61 of the second optical feedback fiber 60 are located within an area of the ring core 43 of the output optical fiber 40. Thus, 90 % or more (more preferably 95 % or more) of light propagating through the cores 31 of the second input optical fibers 30 is optically coupled to the ring core 43 of the output optical fiber 40.

With this configuration, a laser beam generated by each of the first laser light sources 11 propagates through the core 21 of the first input optical fiber 20 and enters the core 81 of the bridge fiber 80 in the optical combiner 2. The laser beam that entered the core 81 of the bridge fiber 80 then enters the core 91 of the intermediate optical fiber 90 in a state in which the laser beam has been reduced in diameter by the diameter reduction portion 84. The laser beam that has entered the core 91 of the intermediate optical fiber 90 propagates the core 91 and then enters the center core 41 of the output optical fiber 40. The laser beam that has entered the center core 41 of the output optical fiber 40 propagates through an interior of the center core 41. Then the laser beam is directed as a portion of the laser beam L to the workpiece W on the stage 5 from the laser emission portion 3 (see Fig. 1).

Furthermore, a laser beam generated by each of the second laser light sources 12 propagates through the core 31 of the second input optical fiber 30 and enters the ring core 43 of the output optical fiber 40 in the optical combiner 2. The laser beam that has entered the ring core 43 of the output optical fiber 40 propagates through an interior of the ring core 43. Then the laser beam is directed as another portion of the laser beam L to the workpiece W on the stage 5 from the laser emission portion 3 (see Fig. 1).

In this manner, according to the laser apparatus 1 of the present embodiment, the laser beam L including the laser beams generated by the first laser light sources 11 on its central side and the laser beams generated by the second laser light sources 12 on its outer side is directed to the workpiece W on the stage 5 from the laser emission portion 3.

The controller 4 can control the first laser light sources 11 and the second laser light sources 12, for example, by controlling electric currents supplied to the first laser light sources 11 and electric currents supplied to the second laser light sources 12. Thus, the controller 4 can control the first laser light sources 11 and the second laser light sources 12 to change powers of laser beams generated by the first laser light sources 11 and powers of laser beams generated by the second laser light sources 12. Therefore, the controller 4 can control the first laser light sources 11 and the second laser light sources 12 to adjust a ratio of the intensity of laser beams entering the center core 41 of the output optical fiber 40 from the first laser light sources 11 and the intensity of laser beams entering the ring core 43 of the output optical fiber 40 from the second laser light sources 12. Specifically, the controller 4 in the present embodiment is configured to be capable of change a power of the laser beams entering the center core 41 of the output optical fiber 40 from the first laser light sources 11 and a power of the laser beams entering the ring core 43 of the output optical fiber 40 from the second laser light sources 12. Such control with the controller 4 enables adjustment in power of the laser beam L emitted from the laser emission portion 3 of the laser apparatus 1 between a central region and a peripheral region of the laser beam L. Thus, a profile of the laser beam L can be changed with ease.

As shown in Fig. 1, a cladding mode remover 6 operable to remove a cladding mode propagating through the outer cladding 44 of the output optical fiber 40 is provided on the output optical fiber 40 between the optical combiner 2 and the laser emission portion 3. Any known cladding mode removal structure may be used for the cladding mode remover 6. Therefore, details of the cladding mode remover 6 are omitted herein. This cladding mode remover 6 can remove an unnecessary cladding mode from the laser beam propagating through the output optical fiber 40 and can thus inhibit such a cladding mode from exerting an adverse influence on the laser beam L emitted from the laser emission portion 3.

For example, when a laser beam L is directed to the workpiece W on the stage 5 from the laser emission portion 3 to process the workpiece W, the laser beam L may be reflected from a surface of the workpiece W and recoupled to the output optical fiber 40 at the laser emission portion 3. Of such light, light that has been recoupled to the center core 41 of the output optical fiber 40 at the laser emission portion 3 (hereinafter referred to as a "first optical feedback") propagates from the laser emission portion 3 through the center core 41 toward the upstream optical combiner 2. Since the center core 41 of the output optical fiber 40 is optically connected to the core 91 of the intermediate optical fiber 90 in the optical combiner 2, this first optical feedback enters the core 91 of the intermediate optical fiber 90 from the center core 41 of the output optical fiber 40 and reaches the core 81 of the bridge fiber 80 in the optical combiner 2. Since the core 81 of the bridge fiber 80 is optically connected to the core 51 of the first optical feedback fiber 50 as described above, a portion of the first optical feedback enters the core 51 of the first optical feedback fiber 50, propagates through the core 51 of the first optical feedback fiber 50, and reaches the aforementioned optical feedback detection unit 70.

Furthermore, light that has been recoupled to the ring core 43 of the output optical fiber 40 at the laser emission portion 3 (hereinafter referred to as a "second optical feedback") propagates from the laser emission portion 3 through the ring core 43 toward the upstream optical combiner 2. Since the ring core 43 of the output optical fiber 40 is optically connected to the core 61 of the second optical feedback fiber 60 as described above, a portion of the second optical feedback enters the core 61 of the second optical feedback fiber 60, propagates through the core 61 of the second optical feedback fiber 60, and reaches the aforementioned optical feedback detection unit 70.

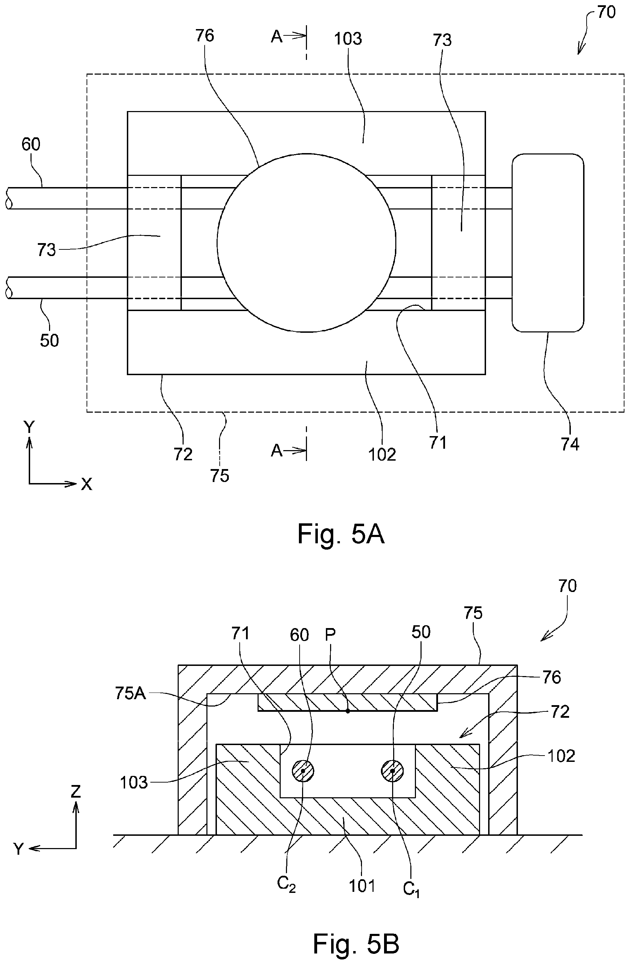

Now the optical feedback detection unit 70 will be described in detail. Fig. 5A is a plan view schematically showing the optical feedback detection unit 70, and Fig. 5B is a cross-sectional view taken along line A-A of Fig. 5A. As shown in Figs. 5A and 5B, the optical feedback detection unit 70 of the present embodiment includes a fiber accommodation portion 72 having a groove 71 where the first optical feedback fiber 50 and the second optical feedback fiber 60 are received, resins 73 that fix the first optical feedback fiber 50 and the second optical feedback fiber 60 within the groove 71 of the fiber accommodation portion 72, a beam damper 74 connected to ends of the first optical feedback fiber 50 and the second optical feedback fiber 60, a frame 75 that covers the fiber accommodation portion 72 and the beam damper 74 (shown as being transparent in Fig. 5A), and a photodetector 76 attached to a ceiling surface 75A of the frame 75. In the present embodiment, for the sake of convenience, the +Z-direction in Fig. 5B is referred to as "upper" or "upward," whereas the -Z-direction is referred to as "lower" or "downward."

The fiber accommodation portion 72 has a base portion 101, a first side wall 102 extending in the +Z-direction (height direction) from the base portion 101, and a second side wall 103 extending in the +Z-direction at a location distant from the first side wall 102. The first side wall 102 and the second side wall 103 extend in parallel to each other along the X-direction. The groove 71 of the fiber accommodation portion 72 is defined by the base portion 101, the first side wall 102, and the second side wall 103. The groove 71 extends along the X-direction. The first optical feedback fiber 50 and the second optical feedback fiber 60 are received along the X-direction within the groove 71. Those optical feedback fibers 50 and 60 are fixed on opposite ends of the fiber accommodation portion 72 in the X-direction by the resins 73. Thus, use of the resins 73 to fix the optical feedback fibers 50 and 60 within the groove 71 enables the optical feedback fibers 50 and 60 to be readily positioned with accuracy.

The photodetector 76 is arranged near (above) the two optical feedback fibers 50 and 60 received within the groove 71 of the fiber accommodation portion 72. In the present embodiment, a photodetector capable of detecting Rayleigh scattering light is used as the photodetector 76. Such a photodetector capable of detecting Rayleigh scattering light has a high speed of response and can perform precise detection. Furthermore, because Rayleigh scattering light has a power corresponding to a power of light propagating through an optical fiber irrespective of a light guide direction of light propagating through the optical fiber, a photodetector capable of detecting Rayleigh scattering light can detect optical feedbacks propagating through the optical feedback fibers 50 and 60 when it is disposed near the optical feedback fibers 50 and 60. Therefore, use of a photodetector capable of detecting Rayleigh scattering light obviates necessity to remove coverings of the optical feedback fibers 50 and 60 and apply a resin having a high refractive index onto the optical feedback fibers 50 and 60, in order to acquire optical feedbacks propagating through the optical feedback fibers 50 and 60, and enables optical feedbacks to be detected with a simple arrangement.

With the optical feedback detection unit 70, the first optical feedback propagating in an upstream direction through the center core 41 of the output optical fiber 40 and the second optical feedback propagating in an upstream direction through the ring core 43 of the output optical fiber 40 can simultaneously be detected. Therefore, even if reflection light generated by reflection of the laser beam L from the surface of the workpiece W or the like is recoupled to the center core 41 and/or the ring core 43 of the output optical fiber 40, the amount of an optical feedback propagating through the center core 41 and/or the ring core 43 can be detected by the optical feedback detection unit 70. Thus, optical feedbacks propagating through different optical waveguides can be detected with a single optical feedback detection unit 70. The number of photodetectors 76 required for the optical feedback detection unit 70 can be minimized, and a detection circuit and the like can be simplified. Therefore, optical feedbacks propagating through different optical waveguides can be detected with a simple and inexpensive arrangement. As a result, influence from those optical feedbacks on the laser light sources 11 and 12 and other components in the laser apparatus 1 can be evaluated with accuracy, and the laser apparatus 1 can be operated under safe conditions.

Generally, a measurement voltage obtained when Rayleigh scattering of light propagating through an optical fiber is measured by a photodetector is in inverse proportion to the square of a distance from a center of a core of the optical fiber to a center of the photodetector. Specifically, when an optical fiber is disposed farther away from a photodetector, a sensitivity of the photodetector to light propagating through the optical fiber is lowered. In the example shown in Fig. 5B, the photodetector 76 and the optical feedback fibers 50 and 60 are arranged such that a distance from the center C₁ of the core 51 of the first optical feedback fiber 50 to the center P of the photodetector 76 is equal to a distance from the center C₂ of the core 61 of the second optical feedback fiber 60 to the center P of the photodetector 76. Therefore, according to the example shown in Fig. 5B, a sensitivity of the photodetector 76 to the first optical feedback propagating through the first optical feedback fiber 50 is equal to a sensitivity of the photodetector 76 to the second optical feedback propagating through the second optical feedback fiber 60.

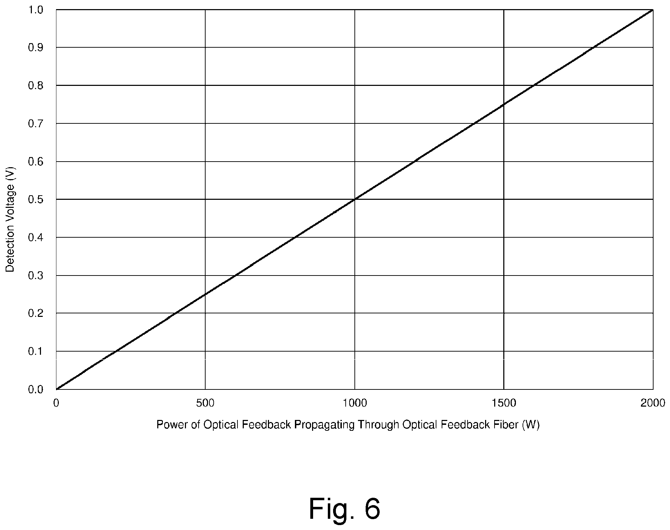

For example, if a relationship as illustrated in Fig. 6 exists between a power of the first optical feedback propagating through the first optical feedback fiber 50 and a detection voltage by the photodetector 76, a power of the second optical feedback propagating through the second optical feedback fiber 60 and a detection voltage by the photodetector 76 will have a relationship as illustrated in Fig. 6. For example, in a case of a configuration in which an anomaly is determined if the detection voltage of the photodetector 76 exceeds a threshold of 0.5 V, an anomaly can be determined when a power of the optical feedback propagating through the center core 41 and/or the ring core 43 exceeds 1000 W.

In the present embodiment, as shown in Fig. 1, a detection signal of the optical feedback detection unit 70 is inputted to the controller 4. Therefore, the controller 4 can properly control the first laser light sources 11 and the second laser light sources 12 depending on detection results of the optical feedback detection unit 70. For example, the controller 4 may control the first laser light sources 11 and/or the second laser light sources 12 to reduce or cease outputs of the first laser light sources 11 and/or the second laser light sources 12 when the controller 4 determines from the detection signal of the optical feedback detection unit 70 that the amount of the first optical feedback and/or the second optical feedback increases (when the detection voltage exceeds 0.5 V in the above example). In this manner, if an anomaly is caused in the laser apparatus 1, the controller 4 can control the first laser light sources 11 and the second laser light sources 12 so as to prevent the laser apparatus 1 from failing.

Furthermore, even if light is recoupled to the outer cladding 44 of the output optical fiber 40 at the laser emission portion 3 so as to propagate in an upstream direction, the aforementioned cladding mode remover 6, which is provided between the optical feedback detection unit 70 and the laser emission portion 3, can remove such an optical feedback. Therefore, such an optical feedback can be inhibited from exerting an adverse influence on the detection results of the optical feedback detection unit 70. Thus, a detection precision for the first optical feedback and the second optical feedback can be improved.

The intensity of the first optical feedback is conceivably low as compared to the intensity of the laser beams generated by the first laser light sources 11. Therefore, if the laser beams generated by the first laser light sources 11 enter the first optical feedback fiber 50, the first optical feedback becomes difficult to detect. In the optical combiner 2 of the present embodiment, the first input optical fibers 20 connected to the first laser light sources 11 and the first optical feedback fiber 50 are both optically connected to the center core 41 of the output optical fiber 40. With this configuration, the laser beams generated by the first laser light sources 11 are less prone to enter the first optical feedback fiber 50. Accordingly, influence on the optical feedback detection unit 70 from the laser beams generated by the first laser light sources 11 can be reduced, so that the first optical feedback can be detected with a high precision.

Similarly, the intensity of the second optical feedback is conceivably low as compared to the intensity of the laser beams generated by the second laser light sources 12. Therefore, if the laser beams generated by the second laser light sources 12 enter the second optical feedback fiber 60, the second optical feedback becomes difficult to detect. In the optical combiner 2 of the present embodiment, the second input optical fibers 30 connected to the second laser light sources 12 and the second optical feedback fiber 60 are both optically connected to the ring core 43 of the output optical fiber 40. Therefore, the laser beams generated by the second laser light sources 12 are less prone to enter the second optical feedback fiber 60. Accordingly, influence on the optical feedback detection unit 70 from the laser beams generated by the second laser light sources 12 can be reduced, so that the second optical feedback can be detected with a high precision.

Furthermore, the optical combiner 2 of the present embodiment is configured such that a plurality of first input optical fibers 20 are connected to the center core 41 of the output optical fiber 40 by the bridge fiber 80 including the diameter reduction portion 84 and the intermediate optical fiber 90. Therefore, the laser beams from a plurality of first laser light sources 11 can enter the center core 41 of the output optical fiber 40. Thus, a power of a laser beam outputted from the center core 41 of the output optical fiber 40 can be increased.

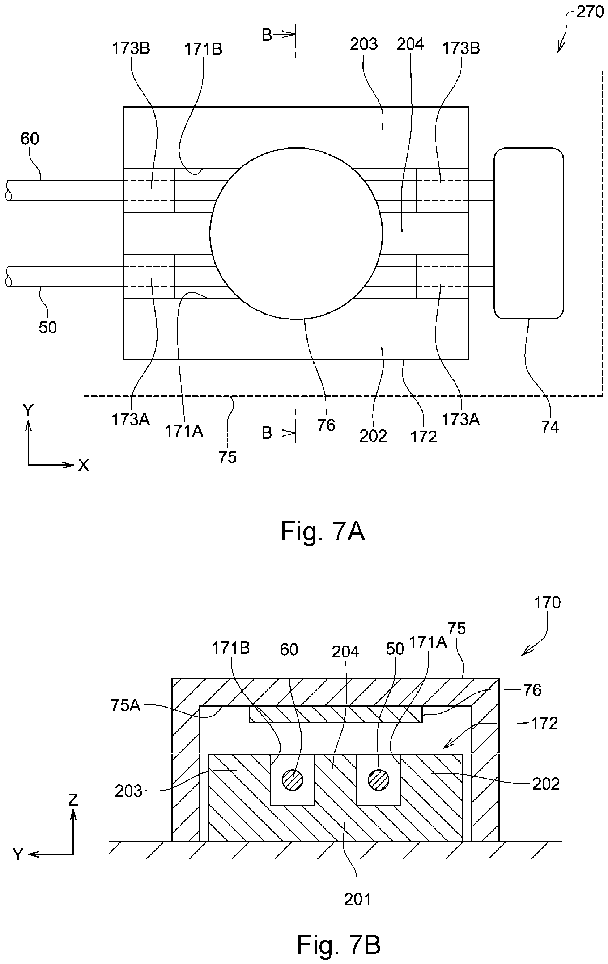

Fig. 7A is a plan view schematically showing an optical feedback detection unit 170 in a laser apparatus according to a second embodiment of the present invention, and Fig. 7B is a cross-sectional view taken along line B-B of Fig. 7A. In the aforementioned first embodiment, the first optical feedback fiber 50 and the second optical feedback fiber 60 are received within the single groove 71 formed in the fiber accommodation portion 72. In contrast, the present embodiment uses a fiber accommodation portion 172 having two grooves 171A and 171B extending in parallel to each other along the X-direction. The first optical feedback fiber 50 is received within the groove 171A (first groove), and the second optical feedback fiber 60 is received within the groove 171B (second groove).

Specifically, the fiber accommodation portion 172 has a base portion 201, a first side wall 202 extending in the +Z-direction (height direction) from the base portion 201, a second side wall 203 extending in the +Z-direction at a location distant from the first side wall 202, and an intermediate wall 204 extending in the +Z-direction between the first side wall 202 and the second side wall 203. The first side wall 202, the second side wall 203, and the intermediate wall 204 extend in parallel to each other along the X-direction. The groove 171A of the fiber accommodation portion 172 is defined by the base portion 201, the first side wall 202, and the intermediate wall 204. The groove 171A extends along the X-direction. The first optical feedback fiber 50 is received along the X-direction within the groove 171A. The first optical feedback fiber 50 is fixed on opposite ends of the fiber accommodation portion 172 in the X-direction by resins 173A. The groove 171B of the fiber accommodation portion 172 is defined by the base portion 201, the intermediate wall 204, and the second side wall 203. The groove 171B extends along the X-direction. The second optical feedback fiber 60 is received along the X-direction within the groove 171B. The second optical feedback fiber 60 is fixed on opposite ends of the fiber accommodation portion 172 in the X-direction by resins 173B. Thus, the respective optical feedback fibers 50 and 60 are fixed in the separate grooves 171A and 171B. Accordingly, the respective optical feedback fibers 50 and 60 can readily be positioned with accuracy.

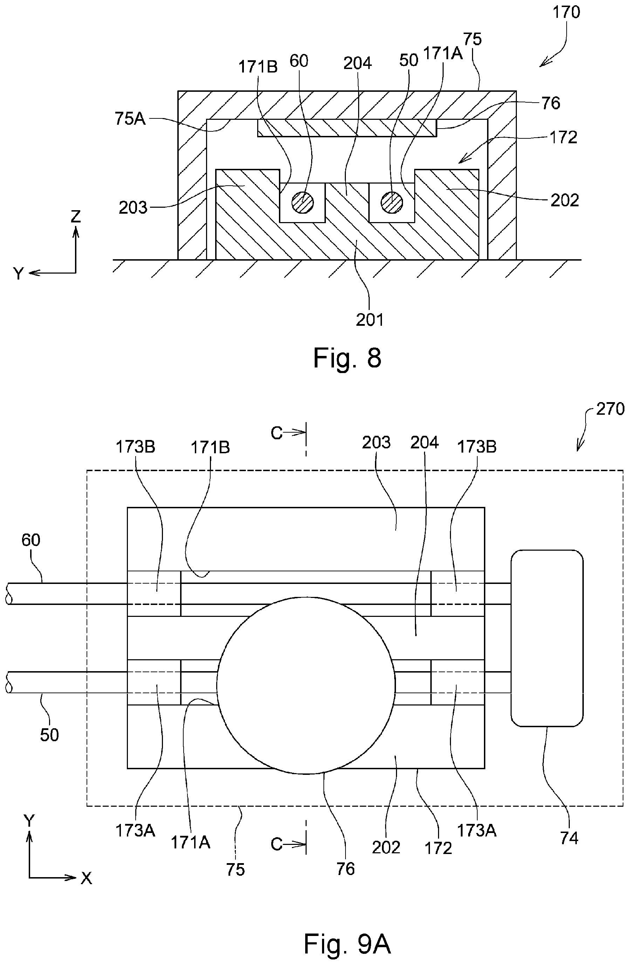

In this case, as illustrated in Fig. 8, a height of the intermediate wall 204 from the base portion 201 may be lower than heights of the first side wall 202 and the second side wall 203 as measured from the base portion 201 so that the intermediate wall 204 of the fiber accommodation portion 172 does not inhibit Rayleigh scattering of an optical feedback propagating through the first optical feedback fiber 50 and Rayleigh scattering of an optical feedback propagating through the second optical feedback fiber 60 from entering the photodetector 76. With this configuration, the first optical feedback and the second optical feedback can be detected with a higher precision.

The center core 41 and the ring core 43 may have different resistances to an optical feedback in the output optical fiber. Therefore, detection of an anomaly may be demanded, for example, when an optical feedback that exceeds 1000 W propagates through the center core 41 and when an optical feedback that exceeds 2000 W propagates through the ring core 43. The following embodiments are applicable to such a case.

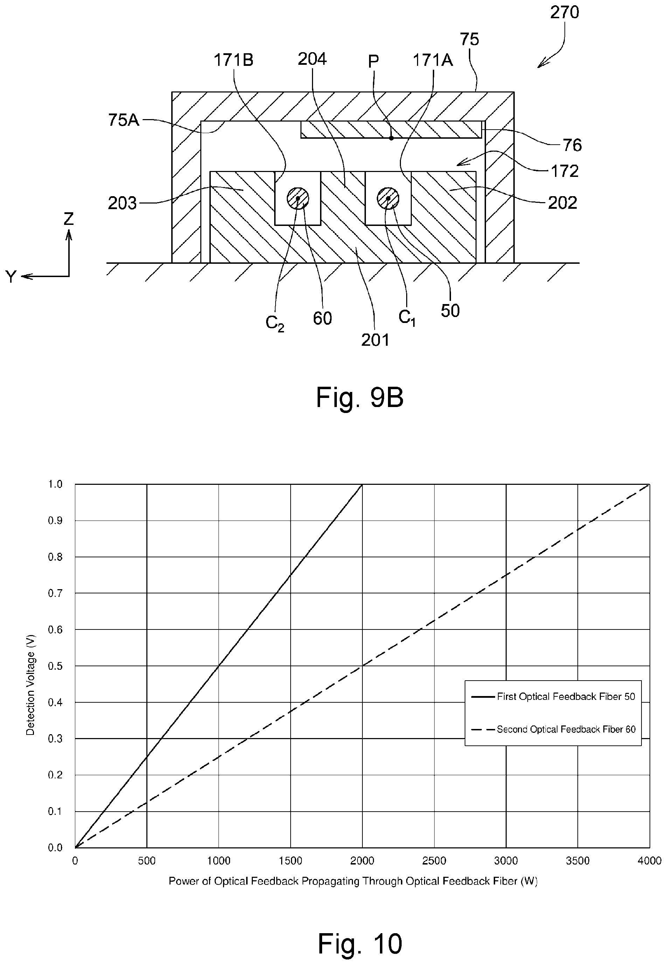

Fig. 9A is a plan view schematically showing an optical feedback detection unit 270 of a laser apparatus according to a third embodiment of the present invention, and Fig. 9B is a cross-sectional view taken along line C-C of Fig. 9A. In the aforementioned second embodiment, the center P of the photodetector 76 is located equidistantly from the center C₁ of the first optical feedback fiber 50 and the center C₂ of the second optical feedback fiber 60. Therefore, the sensitivity of the photodetector 76 to the first optical feedback propagating through the optical feedback fiber 50 is equal to the sensitivity of the photodetector 76 to the second optical feedback propagating through the second optical feedback fiber 60. In the present embodiment, however, the photodetector 76 is deviated in the Y-direction, so that the sensitivity of the photodetector 76 to the second optical feedback propagating through the second optical feedback fiber 60 is lower than the sensitivity of the photodetector 76 to the first optical feedback propagating through the first optical feedback fiber 50.

For example, a relationship as illustrated in Fig. 10 exists between a power of the first optical feedback propagating through the first optical feedback fiber 50 and a power of the second optical feedback propagating through the second optical feedback fiber 60 and a detection voltage by the photodetector 76. Therefore, in a case of a configuration in which an anomaly is determined if the detection voltage of the photodetector 76 exceeds a threshold of 0.5 V, an anomaly can be determined when a power of the first optical feedback propagating through the center core 41 exceeds 1000 W, and an anomaly can be determined when a power of the second optical feedback propagating through the ring core 43 exceeds 2000 W. Thus, an anomaly can be detected depending on differences between resistances of the center core 41 and the ring core 43 to an optical feedback.

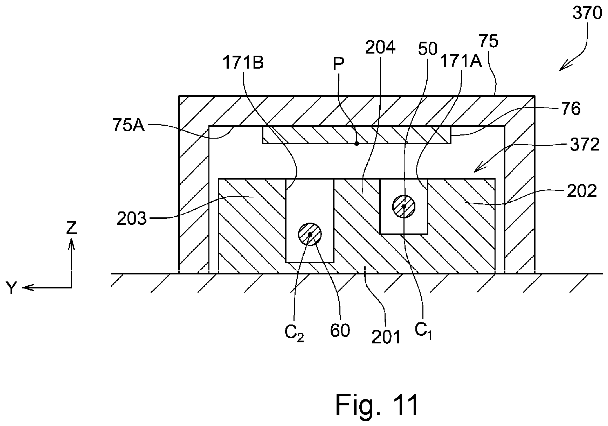

Fig. 11 is a cross-sectional view schematically showing an optical feedback detection unit 370 according to a fourth embodiment of the present invention. In the second embodiment, the position of the photodetector 76 is deviated in the Y-direction to adjust sensitivities of the photodetector 76 to the first optical feedback and the second optical feedback. A configuration illustrated in Fig. 11 can also be used to adjust sensitivities of the photodetector 76.

The optical feedback detection unit 370 of the present embodiment has a similar configuration to that of the second embodiment illustrated in Fig. 7. However, one of the grooves 171B is deeper than the other groove 171A in the fiber accommodation portion 372. The second optical feedback fiber 60 is received within and fixed in the deeper groove 171B. This configuration allows the second optical feedback fiber 60 to be located on the -Z-side of the first optical feedback fiber 50. As result, a distance from the center C₂ of the second optical feedback fiber 60 to the center P of the photodetector 76 becomes longer than a distance from the center C₁ of the first optical feedback fiber 50 to the center P of the photodetector 76. Therefore, a sensitivity of the photodetector 76 to the second optical feedback propagating through the second optical feedback fiber 60 becomes lower than a sensitivity of the photodetector 76 to the first optical feedback propagating through the first optical feedback fiber 50.

Furthermore, in the aforementioned second embodiment, inner surfaces of one of the grooves 171A and 171B can be plated with gold to increase a reflectivity of light. Therefore, for example, inner surfaces of the groove 171A can be plated with gold so as to allow a portion of the first optical feedback propagating through the first optical feedback fiber 50 to be reflected from the inner surfaces of the groove 171A, so that the first optical feedback propagating through the first optical feedback fiber 50 can be made more likely to enter the photodetector 76 than the second optical feedback propagating through the second optical feedback fiber 60. Thus, a sensitivity of the photodetector 76 to the first optical feedback can be made higher than a sensitivity of the photodetector 76 to the second optical feedback.

Furthermore, an alumite treatment can be performed on inner surfaces of one of the grooves 171A and 171B so that light is absorbed in those surfaces. Therefore, for example, an alumite treatment can be performed on inner surfaces of the groove 171B so as to allow a portion of the second optical feedback propagating through the second optical feedback fiber 60 to be absorbed in the inner surfaces of the groove 171B, so that the second optical feedback propagating through the second optical feedback fiber 60 can be made more unlikely to enter the photodetector 76 than the first optical feedback propagating through the first optical feedback fiber 50. Thus, a sensitivity of the photodetector 76 to the second optical feedback can be made lower than a sensitivity of the photodetector 76 to the first optical feedback.

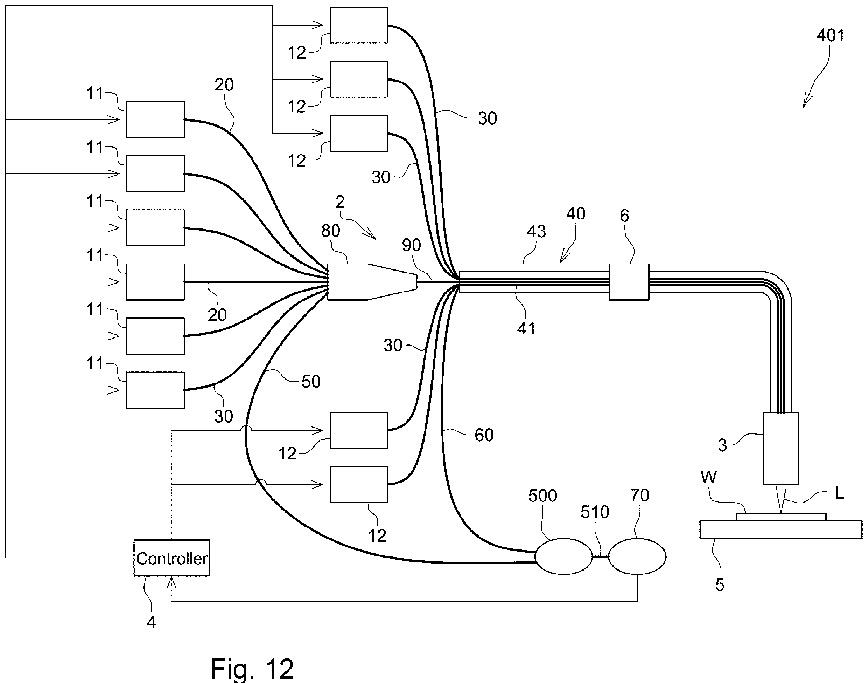

Fig. 12 is a schematic block diagram showing a configuration of a laser apparatus 401 according to a fifth embodiment of the present invention. In the laser apparatus 1 illustrated in Fig. 1, the first optical feedback fiber 50 and the second optical feedback fiber 60 are connected directly to the optical feedback detection unit 70. In the present embodiment, the first optical feedback fiber 50 and the second optical feedback fiber 60 may be connected to an optical combiner 500, which combines optical feedbacks propagating through the first optical feedback fiber 50 and the second optical feedback fiber 60 into an optical fiber 510. The optical feedbacks propagating through the optical fiber 510 may be detected by the optical feedback detection unit 70.

In the aforementioned embodiments, the output optical fiber 40 has two optical waveguides including the center core 41 and the ring core 43. Nevertheless, the output optical fiber 40 may have three or more optical waveguides. Furthermore, cross-sectional shapes of those cores are not limited to the illustrated circular and ring shapes.

In the above embodiments, the laser beams may have different wavelengths between a plurality of first laser light sources 11 or between a plurality of second laser light sources 12.

Furthermore, the aforementioned optical combiner 2 is formed of optical fibers connected by fusion splice. However, the optical combiner that connects the optical fibers 20 and 30 to the center core 41 and the ring core 43 of the output optical fiber 40 is not limited to such a form. For example, a mirror or a diffraction grating that selectively reflects light having a specific wavelength may be used to form an optical combiner.

In the above embodiments, the resins 73, 173A, and 173B for fixing the optical feedback fibers 50 and 60 are disposed on opposite ends of the grooves 71, 171A, and 171B in the X-direction within the fiber accommodation portions 72 and 172. However, the location of the resins 73, 173A, and 173B is not limited to the illustrated examples. The resins 73, 173A, and 173B may be disposed at different locations of the grooves 71, 171A, and 171B within the fiber accommodation portions 72 and 172. Alternatively, the resins 73, 173A, and 173B may be filled along the overall length of the grooves 71, 171A, and 171B.

As described above, according to one aspect of the present invention, there is provided a laser apparatus capable of detecting optical feedbacks propagating through a plurality of optical waveguides in an output optical fiber with a simple and inexpensive configuration. The laser apparatus comprises an output optical fiber including a first optical waveguide and a second optical waveguide; at least one first laser light source operable to generate a laser beam; at least one first input optical fiber that allows the laser beam generated by the at least one first laser light source to propagate therethrough; at least one second laser light source operable to generate a laser beam; at least one second input optical fiber that allows the laser beam generated by the at least one second laser light source to propagate therethrough; an optical combiner configured so that the at least one first input optical fiber is optically connected to the first optical waveguide of the output optical fiber and that the at least one second input optical fiber is optically connected to the second optical waveguide, the optical combiner being capable of directing the laser beams from the at least one first laser light source and the at least one second laser light source to the first optical waveguide and the second optical waveguide of the output optical fiber; a laser emission portion operable to emit the laser beams that have entered the first optical waveguide and the second optical waveguide of the output optical fiber from the optical combiner; a first optical feedback fiber that allows a first optical feedback that has returned from the laser emission portion to the first optical waveguide of the output optical fiber toward the optical combiner to propagate therethrough; and a second optical feedback fiber that allows a second optical feedback that has returned from the laser emission portion to the second optical waveguide of the output optical fiber toward the optical combiner to propagate therethrough; and an optical feedback detection unit operable to detect the first optical feedback that has propagated through the first optical feedback fiber and the second optical feedback that has propagated through the second optical feedback fiber together.

With this configuration, even if reflection light or the like is recoupled to either one of the first optical waveguide and the second optical waveguide of the output optical fiber so as to propagate as an optical feedback through the first optical waveguide or the second optical waveguide, the optical feedback detection unit can detect a first optical feedback propagating through the first optical waveguide and a second optical feedback propagating through the second optical waveguide. Thus, optical feedbacks propagating through different optical waveguides can be detected with a single optical feedback detection unit. The number of photodetectors required for the optical feedback detection unit can be minimized, and a detection circuit and the like can be simplified. Therefore, optical feedbacks propagating through different optical waveguides can be detected with a simple and inexpensive arrangement. As a result, influence from those optical feedbacks on the laser light sources and other components in the laser apparatus can be evaluated with accuracy, and the laser apparatus can be operated under safe conditions.

The optical feedback detection unit may preferably include a photodetector operable to detect Rayleigh scattering of the first optical feedback that has propagated through the first optical feedback fiber and Rayleigh scattering of the second optical feedback that has propagated through the second optical feedback fiber together. Since such a photodetector can detect an optical feedback when it is disposed near the optical feedback fiber, use of such a photodetector obviates necessity to remove a covering of the optical feedback fiber and apply a resin having a high refractive index onto the optical feedback fiber, in order to acquire an optical feedback propagating through the optical feedback fiber. Thus, an optical feedback can be detected with a simple arrangement.

The optical feedback detection unit may preferably include a fiber accommodation portion having at least one groove that accommodates the first optical feedback fiber and the second optical feedback fiber along the at least one groove and a resin that fixes the first optical feedback fiber and the second optical feedback fiber within the at least one groove of the fiber accommodation portion. Use of the resin to fix the optical feedback fiber within the groove enables the optical feedback fiber to be readily positioned with accuracy.

The fiber accommodation portion may include a base portion, a first side wall extending from the base portion in a height direction, a second side wall extending from the base portion in the height direction at a location distant from the first side wall, and an intermediate wall extending from the base portion between the first side wall and the second side wall. The at least one groove of the fiber accommodation portion may include a first groove defined by the base portion, the first side wall, and the intermediate wall, the first groove accommodating the first optical feedback fiber along the first groove and a second groove defined by the base portion, the intermediate wall, and the second side wall, the second groove accommodating the second optical feedback fiber along the second groove. With this configuration, the first optical feedback fiber and the second optical feedback fiber can be fixed in the separate grooves. Accordingly, the respective optical feedback fibers can readily be positioned with accuracy.

A height of the intermediate wall as measured from the base portion may be lower than heights of the first side wall and the second side wall as measured from the base portion. With this configuration, the intermediate wall does not inhibit light from entering the photodetector from the first optical feedback fiber and the second optical feedback fiber. Accordingly, the first optical feedback and the second optical feedback can be detected with a higher precision.

The output optical fiber may include a center core centrally formed as the first optical waveguide, an inner cladding having a refractive index lower than a refractive index of the center core, the inner cladding surrounding a circumference of the center core, a ring core having a refractive index higher than the refractive index of the inner cladding, the ring core surrounding a circumference of the inner cladding as the second optical waveguide, and a low-refractive-index medium having a refractive index lower than the refractive index of the ring core. By controlling laser beams entering the respective optical waveguides of the output optical fiber, a beam profile of a laser beam to be directed to a workpiece can be changed into a desired form.

The laser apparatus may further comprise a controller operable to control the at least one first laser light source and the at least one second laser light source based on the first optical feedback and the second optical feedback detected by the optical feedback detection unit. If an anomaly is caused in the laser apparatus, the controller can control the first laser light source and the second laser light source so as to prevent the laser apparatus from failing.

Although some preferred embodiments of the present invention have been described, the present invention is not limited to the aforementioned embodiments. It should be understood that various different forms may be applied to the present invention within the technical idea thereof.

This application claims the benefit of priority from Japanese patent application No. 2021-203156, filed on December 15, 2021, the disclosure of which is incorporated herein in its entirety by reference.

### Industrial Applicability

The present invention is suitably used for a laser apparatus capable of outputting a laser beam from an output optical fiber having a plurality of optical waveguides.

### Description of Reference Numerals and Signs

- 1, 401: Laser apparatus

- 2: Optical combiner
- 3: Laser emission portion
- 4: Controller
- 5: Stage
- 6: Cladding mode remover
- 11: First laser light source
- 12: Second laser light source
- 20: First input optical fiber
- 30: Second input optical fiber
- 40: Output optical fiber
- 41: Center core
- 42: Inner cladding
- 43: Ring core
- 44: Outer cladding
- 50: First optical feedback fiber
- 60: Second optical feedback fiber
- 70, 170, 270, 370: Optical feedback detection unit
- 71: Groove
- 72, 172: Fiber accommodation portion
- 73, 173A, 173B: Resin
- 74: Beam damper
- 75: Frame
- 76: Photodetector
- 80: Bridge fiber
- 90: Intermediate optical fiber
- 101, 201: Base portion
- 102, 202: First side wall
- 103, 203: Second side wall
- 171A: (First) groove
- 171B: (Second) groove
- 204: Intermediate wall
- 500: Optical combiner
- 510: Optical fiber
- L: Laser beam
- W: Workpiece

## Claims

1. A laser apparatus comprising:
an output optical fiber including a first optical waveguide and a second optical waveguide;
at least one first laser light source operable to generate a laser beam;
at least one first input optical fiber that allows the laser beam generated by the at least one first laser light source to propagate therethrough;
at least one second laser light source operable to generate a laser beam;
at least one second input optical fiber that allows the laser beam generated by the at least one second laser light source to propagate therethrough;
an optical combiner configured so that the at least one first input optical fiber is optically connected to the first optical waveguide of the output optical fiber and that the at least one second input optical fiber is optically connected to the second optical waveguide, the optical combiner being capable of directing the laser beams from the at least one first laser light source and the at least one second laser light source to the first optical waveguide and the second optical waveguide of the output optical fiber;
a laser emission portion operable to emit the laser beams that have entered the first optical waveguide and the second optical waveguide of the output optical fiber from the optical combiner;
a first optical feedback fiber that allows a first optical feedback that has returned from the laser emission portion to the first optical waveguide of the output optical fiber toward the optical combiner to propagate therethrough;
a second optical feedback fiber that allows a second optical feedback that has returned from the laser emission portion to the second optical waveguide of the output optical fiber toward the optical combiner to propagate therethrough; and
an optical feedback detection unit operable to detect the first optical feedback that has propagated through the first optical feedback fiber and the second optical feedback that has propagated through the second optical feedback fiber together.

2. The laser apparatus as recited in claim 1, wherein the optical feedback detection unit includes a photodetector operable to detect Rayleigh scattering of the first optical feedback that has propagated through the first optical feedback fiber and Rayleigh scattering of the second optical feedback that has propagated through the second optical feedback fiber together.

3. The laser apparatus as recited in claim 1 or 2, wherein the optical feedback detection unit includes:
a fiber accommodation portion having at least one groove that accommodates the first optical feedback fiber and the second optical feedback fiber along the at least one groove, and
a resin that fixes the first optical feedback fiber and the second optical feedback fiber within the at least one groove of the fiber accommodation portion.

4. The laser apparatus as recited in claim 3, wherein the fiber accommodation portion includes:
a base portion,
a first side wall extending from the base portion in a height direction,
a second side wall extending from the base portion in the height direction at a location distant from the first side wall, and
an intermediate wall extending from the base portion between the first side wall and the second side wall, and
wherein the at least one groove of the fiber accommodation portion includes:
a first groove defined by the base portion, the first side wall, and the intermediate wall, the first groove accommodating the first optical feedback fiber along the first groove, and
a second groove defined by the base portion, the intermediate wall, and the second side wall, the second groove accommodating the second optical feedback fiber along the second groove.

5. The laser apparatus as recited in claim 4, wherein a height of the intermediate wall as measured from the base portion is lower than heights of the first side wall and the second side wall as measured from the base portion.

6. The laser apparatus as recited in any one of claims 1 to 5, wherein the output optical fiber includes:
a center core centrally formed as the first optical waveguide,
an inner cladding having a refractive index lower than a refractive index of the center core, the inner cladding surrounding a circumference of the center core,
a ring core having a refractive index higher than the refractive index of the inner cladding, the ring core surrounding a circumference of the inner cladding as the second optical waveguide, and
a low-refractive-index medium having a refractive index lower than the refractive index of the ring core.

7. The laser apparatus as recited in any one of claims 1 to 6, further comprising a controller operable to control the at least one first laser light source and the at least one second laser light source based on the first optical feedback and the second optical feedback detected by the optical feedback detection unit.
